# EUROPÄISCHE PATENTSCHRIFT

(11) **EP 2 065 267 B1**
(45) Veröffentlichungstag und Bekanntmachung des Hinweises auf die Patenterteilung: **24.04.2013**
(21) Anmeldenummer: 08167212.3
(22) Anmeldetag: 22.10.2008
(51) Int. Cl.: B60T 10/02, F16D 57/00

(54) **Lagerung der Rotorwelle eines hydrodynamischen Retarders**
Bearing for the rotor shaft of a hydrodynamic retarder
Palier de l'arbre de rotor d'un retardateur hydrodynamique

(30) Priorität: 29.11.2007 DE 102007047889
(43) Veröffentlichungstag der Anmeldung: 03.06.2009
(73) Patentinhaber: ZF Friedrichshafen AG, 88038 Friedrichshafen (DE)
(72) Erfinder: Buri, Gerhard, 88677, Markdorf (DE); Grupp, Bernhard, 88250, Weingarten (DE); Sauter, Frank, 88074, Meckenbeuren (DE)

(56) Entgegenhaltungen:
- DE-A1- 10 237 766
- DE-C1- 19 812 735
- GB-A- 2 119 895

## Beschreibung

Die vorliegende Erfindung bezieht sich auf die Lagerung der Rotorwelle eines hydrodynamischen Retarders gemäß dem Oberbegriff des Patentanspruchs 1. So ein Retarder Lagerung ist aus der DE 102 37 766 A1 bekannt.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Ein Beispiel einer Bremsanlage mit einem hydrodynamischen Retarder ist in der DE 198 53 830 C1 beschrieben. Der hydrodynamische Retarder weist dabei einen Rotor und einen Stator auf, die ihrerseits einen Arbeitsraum miteinander bilden, sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Kühlungsgrades des Arbeitsraumes, wobei Retarder und Kühleinrichtung im Bremsbetrieb in Sinne eines Kreislaufes vom Arbeitsmedium durchströmt werden.

Aus dem Stand der Technik ist bekannt, die Lagerung der Rotorwelle eines hydrodynamischen Retarders beidseitig des Rotors oder des ganzen Retarderpakets anzuordnen, wobei sich die beiden erforderlichen LagerAufnahmen in unterschiedlichen Gehäusen mit unterschiedlichen Werkstoffen befinden. Aufgrund der unterschiedlichen Werkstoffe der Gehäuse wird das Lagerspiel bedingt durch den hohen Wärmeeintrag des Retarders negativ beeinflusst, insbesondere dann, wenn die Lager in Kegelrollenlager-Bauweise ausgeführt sind.

Aus der DE 4108658 C2 der Anmelderin ist beispielsweise ein hydrodynamischer Retarder bekannt, bei dem die Rotorwelle zum Einen über ein Kegelrollenlager gelagert ist, welches im Stator angeordnet ist, und zum Anderen über ein weiteres Kegelrollenlager gelagert ist, welches im Getriebeabschlussdeckel angeordnet ist.

Der vorliegenden Erfindung liegt die Aufgabe zugrunde, eine Lagerung der Rotorwelle eines hydrodynamischen Retarders anzugeben, durch die das Lagerspiel über den gesamten thermischen Betriebsbereich des Retarders gleich bleibt.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Lagerung der Rotorwelle eines hydrodynamischen Retarders vorgeschlagen, welche in einem Gehäuse des Retarders eingebaut ist.

Vorzugsweise ist das Gehäuse derart gewählt bzw. ausgeführt, dass dessen Wärmeausdehnungskoeffizient dem Wärmeausdehnungskoeffizienten der Rotorwelle entspricht, so dass das Lagerspiel unabhängig vom thermischen Betriebsbereich des Retarders ist.

Gemäß einer besonders vorteilhaften Ausführungsform der Erfindung ist die Lagerung im Stator des Retarders eingebaut.

Hierbei ist der Stator bzw. das Gehäuse, in dem die Lagerung angeordnet ist, aus Gusseisen mit Kugelgraphit (GGG -Werkstoff) hergestellt und besitzt stahlähnliche mechanische Eigenschaften, so dass durch die sehr ähnlichen Wärmeausdehnungskoeffizienten des Gehäuses bzw. des Stators und der aus Stahl hergestellten Rotorwelle die Ausdehnungsdifferenz der beiden Bauteile über den gesamten thermischen Betriebsbereich des Retarders vernachlässigt werden kann. Dies resultiert in vorteilhafter Weise darin, dass über den gesamten thermischen Betriebsbereich des Retarders das Lagerspiel gleich bleibt.

Des weiteren ergibt sich durch die erfindungsgemäße Konzeption der Vorteil, dass nur sehr wenige Teile an der Toleranzkette beteiligt sind, so dass bei geeigneter Auswahl der Fertigungstoleranzen auf eine Einstellung der Lager, die vorzugsweise als Kegelrollenlager ausgeführt sind, verzichtet werden kann.

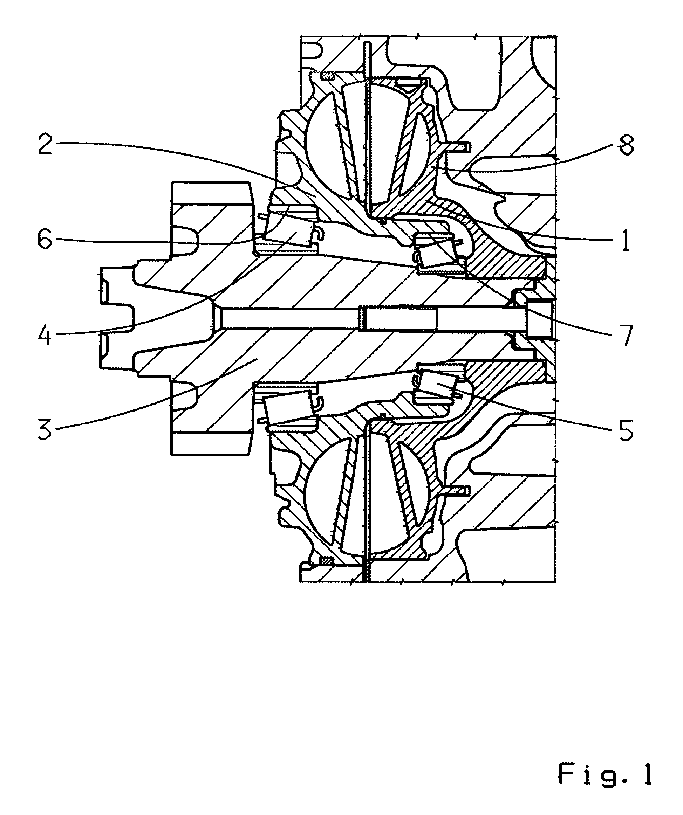

Die Erfindung wird im Folgenden anhand der beigefügten Figur, welche eine schematische Schnittansicht eines eine erfindungsgemäße Lagerung der Rotorwelle aufweisenden hydrodynamischen Retarders darstellt, beispielhaft näher erläutert. Der allgemeine Aufbau und die Funktionsweise eines hydrodynamischen Retarders sind dem Fachmann bestens bekannt. Hier soll daher nur auf Besonderheiten der vorliegenden Erfindung eingegangen werden.

In der Figur ist der Rotor des Retarders mit 1 und der Stator mit 2 bezeichnet, wobei die Rotorwelle mit dem Bezugszeichen 3 versehen ist. Wie aus der Figur ersichtlich, ist die Rotorwelle 3 über zwei Kegelrollenlager 4, 5 gelagert, wobei beide Lager 4, 5 in einer Aufnahme 6 bzw. 7 des Stators 2 angeordnet sind.

Der Stator 2 ist vorzugsweise aus Gusseisen mit Kugelgraphit (GGG - Werkstoff) hergestellt und besitzt somit stahlähnliche mechanische Eigenschaften, wobei die Rotorwelle 3 aus Stahl hergestellt ist, so dass Stator 2 und Rotorwelle 3 sehr ähnliche Wärmeausdehnungskoeffizienten aufweisen, wodurch die Ausdehnungsdifferenz der beiden Bauteile über den gesamten thermischen Betriebsbereich des Retarders vernachlässigt werden kann.

Bei dem gezeigten Beispiel sind Stator 2 und Rotor 1 derart gestaltet, dass sich der Stator 2 radial betrachtet zwischen der Rotorwelle 3 und dem Schaufelkranz 8 des Rotors 1 erstreckt, wodurch ein ausreichender axialer Abstand zwischen den Lagern 4, 5 gewährleistet werden kann; das Lager 5 ist axial betrachtet an dem dem Rotor 1 zugewandten Ende des Stators 2 angeordnet, wobei das Lager 4 an dem dem Rotor 1 abgewandten Ende des Stators 2 angeordnet ist.

Selbstverständlich fällt auch jede konstruktive Ausbildung, insbesondere jede räumliche Anordnung der Bauteile der Lagerung an sich sowie zueinander und soweit technisch sinnvoll, unter den Schutzumfang der vorliegenden Ansprüche, ohne die Funktion der Lagerung, wie sie in den Ansprüchen angegeben ist, zu beeinflussen, auch wenn diese Ausbildungen nicht explizit in der Figur oder in der Beschreibung dargestellt sind.

### Bezugszeichen

- 1: Rotor
- 2: Stator
- 3: Rotorwelle
- 4: Lager
- 5: Lager
- 6: Aufnahme
- 7: Aufnahme
- 8: Schaufelkranz des Rotors

## Patentansprüche

1. Lagerung der Rotorwelle (3) eines hydrodynamischen Retarders, die in einem Gehäuse (2) des Retarders eingebaut ist, **dadurch gekennzeichnet, dass** die Lagerung im Stator (2) des Retarders eingebaut ist.

2. Lagerung der Rotorwelle (3) eines hydrodynamischen Retarders, nach Anspruch 1, **dadurch gekennzeichnet ,dass** das Gehäuse (2) derart gewählt bzw. ausgeführt ist, dass dessen Wärmeausdehnungskoeffizient dem Wärmeausdehnungskoeffizienten der Rotorwelle entspricht, so dass das Lagerspiel unabhängig vom thermischen Betriebsbereich des Retarders ist.

3. Lagerung der Rotorwelle (3) eines hydrodynamischen Retarders, nach Anspruch 2, **dadurch gekennzeichnet, dass** das Gehäuse bzw. der Stator (2) aus Gusseisen mit Kugelgraphit (GGG -Werkstoff) hergestellt ist, so dass durch die sehr ähnlichen Wärmeausdehnungskoeffizienten des Gehäuses bzw. des Stators (2) und der aus Stahl hergestellten Rotorwelle (3) die Ausdehnungsdifferenz der beiden Bauteile über den gesamten thermischen Betriebsbereich des Retarders vernachlässigt werden kann.

## Claims

1. Bearing of the rotor shaft (3) of a hydrodynamic retarder which is installed in a housing (2) of the retarder, **characterized in that** the bearing is installed in the stator (2) of the retarder.

2. Bearing of the rotor shaft (3) of a hydrodynamic retarder according to Claim 1, **characterized in that** the housing (2) is selected or embodied in such a manner that its thermal expansion coefficient corresponds to the thermal expansion coefficient of the rotor shaft so that the bearing play is independent of the thermal operating range of the retarder.

3. Bearing of the rotor shaft (3) of a hydrodynamic retarder according to Claim 2, **characterized in that** the housing or the stator (2) is produced from ductile cast iron (GGG material) so that, as a result of the very similar thermal expansion coefficients of the housing or the stator (2) and the rotor shaft (3) produced from steel, the expansion difference of the two components across the entire thermal operating range of the retarder can be disregarded.

## Revendications

1. Palier de l'arbre de rotor (3) d'un ralentisseur hydrodynamique, qui est monté dans un boîtier (2) du ralentisseur, **caractérisé en ce que** le palier est monté dans le stator (2) du ralentisseur.

2. Palier de l'arbre de rotor (3) d'un ralentisseur hydrodynamique selon la revendication 1, **caractérisé en ce que** le boîtier (2) est sélectionné ou réalisé de telle sorte que son coefficient de dilatation thermique corresponde aux coefficients de dilatation thermique de l'arbre de rotor, de sorte que le jeu de palier soit indépendant de la plage de fonctionnement thermique du ralentisseur.

3. Palier de l'arbre de rotor (3) d'un ralentisseur hydrodynamique selon la revendication 2, **caractérisé en ce que** le boîtier ou le stator (2) est fabriqué en fonte à graphite sphéroïdal (matériau GGG), de sorte que, grâce aux coefficients de dilatation thermique très similaires du boîtier ou du stator (2) et de l'arbre de rotor (3) fabriqué en acier, la différence de dilatation des deux pièces puisse être négligée sur toute la plage de fonctionnement thermique du ralentisseur.
